# EUROPÄISCHE PATENTANMELDUNG

(11) **EP 1 217 311 A2**
(43) Veröffentlichungstag der Anmeldung: **26.06.2002**
(21) Anmeldenummer: 01129801.5
(22) Anmeldetag: 14.12.2001
(51) Int. Cl.: F24D 17/00, F24D 19/10

(54) **Einrichtung für die Bereitstellung von Warmwasser in einer sanitären Installation**

(30) Priorität: 21.12.2000 DE 10063803
(71) Anmelder: Bernhard Banken, 48599 Gronau-Epe (DE)
(72) Erfinder: Bernhard Banken, 48599 Gronau-Epe (DE)
(74) Vertreter: Schulze Horn & Partner GbR

(57) **Zusammenfassung**

Die Erfindung betrifft eine Einrichtung (E) zur Bereitstellung von Warmwasser, mit mindestens einer Warmwasserzapfstelle (ZS) und mit Warmwasserzirkulation, mit einer von einem Warmwasserspeicher (WWS) kommenden Warmwasserzuleitung (WWZ), einer zum Warmwasserspeicher (WWS) führenden Zirkulationsleitung (Z) mit einer Zirkulationspumpe (ZP) und einer zur Zapfstelle (ZS) führende Warmwasserverbrauchsleitung (WWV), wobei ein Sensor (S1) vorgesehen ist, mit dem ein Öffnen der Zapfstelle (ZS) feststellbar und die Pumpe (ZP) einschaltbar ist.

Die neue Einrichtung (E) ist dadurch gekennzeichnet, daß sie ein erstes, druckgesteuertes Ventil (V1) zwischen Warmwasserzuleitung (WWZ) und Zirkulationsleitung (Z), ein zweites, temperaturgesteuertes Ventil (V2) zwischen Warmwasserzuleitung (WWZ) und Warmwasserverbrauchsleitung (WWV) und einen zweiten, temperaturempfindlichen Sensor (S2) an der Warmwasserzuleitung (WWZ) umfaßt, wobei das erste Ventil (V1) durch einen Druckabfall in der Warmwasserverbrauchsleitung (WWV) in Öffnungsstellung bringbar ist, wobei das zweite Ventil (V2) durch den zweiten Sensor (S2) abhängig von der Temperatur des Wassers in der Warmwasserzuleitung (WWZ) in Öffnungs- oder Schließstellung bringbar ist und wobei durch einen Druckanstieg in der Warmwasserverbrauchsleitung (WWV) das erste Ventil (V1) in Schließstellung bringbar und die Zirkulationspumpe (ZP) ausschaltbar ist.

## Beschreibung

Die vorliegende Erfindung betrifft eine Einrichtung für die Bereitstellung von Warmwasser in einer sanitären Installation mit mindestens einer Warmwasserzapfstelle und mit Warmwasserzirkulation, wobei die Einrichtung zumindest eine von einem Warmwasserspeicher kommende Warmwasserzuleitung, eine zum Warmwasserspeicher zurückführende Zirkulationsleitung mit einer schaltbaren Zirkulationspumpe und eine zu der Warmwasserzapfstelle führende Warmwasserverbrauchsleitung umfaßt, wobei ein erster Sensor vorgesehen ist, mit dem ein Öffnen der Warmwasserzapfstelle feststellbar ist und durch den daraufhin die Zirkulationspumpe einschaltbar ist.

Eine Einrichtung der eingangs genannten Art ist aus der DE 195 09 419 A1 bekannt. Wesentlicher Teil dieser Einrichtung ist eine Zirkunlationspumpensteuerung, mit welcher eine Zirkulationspumpe in einer zentralen Warmwasserversorgung bedarfsabhängig eingeschaltet wird. Durch Öffnen eines beliebigen Warmwasserventils wird das warme Wasser aus einem Speicherbehälter in eine Warmwasserleitung gedrückt. Dadurch erwärmt sich ein Temperatursensor, der auf einem Warmwasserrohr in unmittelbarer Nähe des Speicherbehälters montiert ist und schaltet über eine Zirkulationspumpensteuerung die Zirkulationspumpe so lange ein, bis eine eingestellt Zeit abgelaufen ist.

Weiter ist aus der DE 197 03 352 A1 ein Verfahren zur energiesparenden Versorgung von Verbrauchern mit Warmwasser bekannt, wobei das Warmwasser einem zentralen Warmwasserspeicher entnommen und über eine zentrale Warmwasser-Zirkulationsleitung mit Zapfstellen den Verbrauchern zugeführt wird. Im Rücklauf der Warmwasser-Zirkulationsleitung ist eine Warmwasserpumpe vorgesehen. Wesentlich ist hier, daß die Warmwasserpumpe durch kurzzeitige Wasserentnahme an mindestens einer Zapfstelle vorübergehend eingeschaltet wird, sofern die zeitliche Dauer der Wasserentnahme ein vorgegebenes Zeitintervall nicht überschreitet.

Schließlich beschreibt die DE 198 47 128 A1 ein Verfahren zur Signalübertragung und -auswertung für bedarfsorientiert durch Anforderungssignal gesteuerte Zirkulationspumpen in zentralen Warmwasserversorgungssystemen. Dabei wird in diesem System die Warmwasserleitung selbst als Signalübertragungsweg genutzt. Ein Strömungs- und Druckschalter am Warmwasserausgang des Boilers schaltet die Zirkulationspumpe über ein Steuergerät ein, welches als Anforderungssignal nur kurzes, impulsartiges Öffnen einer beliebigen Warmwasserzapfstelle erkennt sowie innerhalb einer einstellbaren Abkühlzeit keine weiteren Steuersignale annimmt.

Als nachteilig wird bei allen bekannten Einrichtungen und Verfahren angesehen, daß sie eine vorgegebene Handhabung des Warmwasserzapfventils erfordern, um ihre Vorteile zu erreichen. Diese besondere Handhabung besteht darin, daß bei Warmwasserbedarf an der Zapfstelle das dortige Warmwasserzapfventil nur kurzzeitig geöffnet werden darf, es muß also unmittelbar nach dem Öffnen das Warmwasserzapfventil wieder geschlossen werden. Dieses kurzzeitige Öffnen dient als Startsignal für die Zirkulationspumpe, die dann für eine vorgegebene Zeit eingeschaltet bleibt. Warmes Wasser kann der Benutzer erst dann durch erneutes Öffnen des Warmwasserzapfventils erhalten, wenn die Zirkulationspumpe so lange in Betrieb war, daß das warme Wasser aus dem Warmwasserspeicher bis zur Warmwasserzapfstelle gefördert ist. Je nach Entfernung der Warmwasserzapfstelle vom Warmwasserspeicher ist diese Zeit aber unterschiedlich und zudem unbestimmt, so daß sie vom Benutzer nur durch Ausprobieren ungefähr ermittelt werden kann. Bei allen bekannten Einrichtungen und Systemen ist es also erforderlich, daß der Benutzer mitdenkt und sich an die relativ umständliche Handhabung gewöhnt und diese Handhabung auch einhält. Nach praktischen Erfahrungen ist diese Voraussetzung aber in vielen Fällen nicht gegeben. Wenn ein Benutzer das Warmwasserventil öffnet und in Öffnungsstellung beläßt, fließt für einige Zeit zunächst kaltes Wasser aus der Zapfstelle, sofern zuvor längere Zeit kein Wasser dort gezapft wurde, bis das warme Wasser vom Warmwasserspeicher bis zur Zapfstelle gelangt ist. Damit wird der an sich mögliche und erwünschte Wasser- und Energiespareffekt zunichte gemacht.

Für die vorliegende Erfindung stellt sich daher die Aufgabe, eine Einrichtung der eingangs genannten Art zu schaffen, die die dargelegten Nachteile des Standes der Technik vermeidet und mit der insbesondere bei vereinfachter Handhabung für den Benutzer eine zuverlässige Energie- und Wassereinsparung erreicht wird.

Die Lösung dieser Aufgabe gelingt erfindungsgemäß mit einer Einrichtung der eingangs genannten Art, die dadurch gekennzeichnet ist,
- daß die Einrichtung weiter ein erstes, druckgesteuertes Ventil zwischen der Warmwasserzuleitung und der Zirkulationsleitung, ein zweites, temperaturgesteuertes Ventil zwischen der Warmwasserzuleitung und der Warmwasserverbrauchsleitung und einen zweiten, temperaturempfindlichen Sensor an oder in der Warmwasserzuleitung umfaßt,
- daß das erste Ventil durch den bei einem Öffnen der Warmwasserzapfstelle in der Warmwasserverbrauchsleitung auftretenden Druckabfall in Öffnungsstellung bringbar ist,
- daß das zweite Ventil durch den zweiten Sensor bei einem Temperaturanstieg des Wassers in der Warmwasserzuleitung über einen einstellbaren Temperaturwert in Öffnungsstellung und bei einem Temperaturabfall des Wassers in der Warmwasserzuleitung unter einen einstellbaren Temperaturwert in Schließstellung bringbar ist und
- daß durch den infolge eines Öffnens des zweiten Ventils auftretenden Druckanstieg in der Warmwasserverbrauchsleitung das erste Ventil in Schließstellung bringbar und die Zirkulationspumpe ausschaltbar ist.

Mit der erfindungsgemäßen Einrichtung wird eine vorteilhaft einfache Handhabung für den Benutzer erreicht. Zum Zapfen von Warmwasser an der Warmwasserzapfstelle genügt ein Öffnen der Warmwasserzapfstelle, woraufhin in der Warmwasserverbrauchsleitung ein Druckabfall eintritt, der als Startsignal für die Zirkulationspumpe verwertet wird. Gleichzeitig öffnet dieser Druckabfall das erste Ventil, das die Warmwasserzuleitung mit der Zirkulationsleitung verbindet. Durch das Öffnen der Warmwasserzapfstelle wird also zunächst der Zirkulationskreislauf in Gang gesetzt, wobei die Warmwasserzapfstelle geöffnet bleiben kann, ohne daß hier ein Wasseraustritt auftritt. Ein solcher Wasseraustritt wird unterbunden durch das zu diesem Zeitpunkt noch geschlossene zweite Ventil. Dieses zweite Ventil ist temperaturgesteuert und wird erst geöffnet, wenn durch die Warmwasserzuleitung infolge der Zirkulation warmes Wasser bis in den Bereich des zweiten Sensors, der zweckmäßig in der Nähe des zweiten Ventils angeordnet ist, geströmt ist. Durch diesen vom zweiten Sensor erfaßten Temperaturanstieg des zuströmenden Wassers öffnet nun selbsttätig das zweite Ventil, durch welches nun warmes Wasser zur zweckmäßig nahegelegenen Warmwasserzapfstelle strömt und dort austritt. Der hierdurch in der Warmwasserverbrauchsleitung auftretende Druckanstieg führt gleichzeitig zu einem Schließen des ersten Ventils, so daß nun der Zirkulationskreislauf unterbrochen ist. Zugleich wird nun auch die Zirkulationspumpe ausgeschaltet, so daß diese nur für die notwendige, relativ kurze Zeit in Betrieb ist. Mit dieser Einrichtung wird also sowohl die Verschwendung von Wasser durch Kaltwasserzapfung aus der Warmwasserzapfstelle verhindert als auch Energie eingespart, weil die Zirkulationspumpe nur genau für die Zeit eingeschaltet bleibt, die erforderlich ist, warmes Wasser aus dem Warmwasserspeicher durch die Warmwasserzuleitung bis in den Bereich des zweiten Ventils, das in der Nähe der Warmwasserzapfstelle liegt, zu fördern. Auch eine unnötige Warmwasserzirkulation durch die Zirkulationsleitung ist somit ausgeschlossen. Durch die Zirkulationsleitung fließt praktisch nur noch kaltes Wasser, so daß diese auch weniger aufwendig isoliert werden muß, was Herstellungskosten einspart.

Wenn kurz nach einem Warmwasserzapfen erneut warmes Wasser gezapft wird, befindet sich das zweite Ventil noch in seiner Öffnungsstellung, solange das im Bereich des zweiten Sensors befindliche Wasser noch eine vorgebbare Mindesttemperatur hat. Damit steht hier nun sofort warmes Wasser an der Warmwasserzapfstelle zur Verfügung. Fehler bei der Bedienung der Einrichtung, die zu einem erhöhten Wasser- oder Energieverbrauch führen, kann der Benutzer hier nicht mehr machen. Damit wird die gewünschte Wasser- und Energieeinsparung in jedem Falle erzielt, ohne daß der Benutzer sich an bestimmte Bedienungsregeln halten muß; er muß sich lediglich daran gewöhnen, daß er nach dem Öffnen der Warmwasserzapfstelle etwas warten muß, bis ein Warmwasseraustritt erfolgt. In der Praxis beträgt diese Wartezeit selbst im ungünstigen Fall weniger als eine Minute.

In weiterer Ausgestaltung ist vorgesehen, daß der erste Sensor ein druckempfindlicher Schalter ist, der bei einem durch das Öffnen der Warmwasserzapfstelle verursachten Druckabfall in der Warmwasserverbrauchsleitung oder einer damit verbundenen Leitung unter einen einstellbaren Druckwert ein Einschaltsignal und bei einem Druckanstieg in der Warmwasserverbrauchsleitung oder einer damit verbundenen Leitung über einen einstellbaren Druckwert ein Ausschaltsignal für die Zirkulationspumpe erzeugt. Mit einem solchen Sensor ist ein Druckabfall und Druckanstieg in der mit dem Sensor gekoppelten Wasserleitung zuverlässig feststellbar und es ist ebenso zuverlässig die Zirkulationspumpe aufgrund der so gewonnenen Signale einschaltbar und ausschaltbar.

Weiter ist bevorzugt vorgesehen, daß der zweite Sensor ein Dehnstoffkörper ist, der bei einem Temperaturanstieg in der Warmwasserzuleitung über einen einstellbaren Temperaturwert das zweite Ventil in Öffnungsrichtung betätigt und der bei einem Temperaturabfall in der Warmwasserzuleitung unter einen einstellbaren Temperaturwert das zweite Ventil in Schließrichtung betätigt. Durch diese Ausführung des zweiten Sensors wird ein zuverlässiger und von elektrischer oder sonstiger externer Energie unabhängiger Betrieb des zweiten Ventils gewährleistet.

Weiter schlägt die Erfindung vor, daß ein Betätigungselement des ersten Ventils mit der Warmwasserverbrauchsleitung hinter dem zweiten Ventil derart hydraulisch gekoppelt ist, daß bei einem Druckabfall in der Warmwasserverbrauchsleitung unter einen einstellbaren Druckwert das Betätigungselement das erste Ventil in Öffnungsrichtung betätigt und daß bei einem Druckanstieg in der Warmwasserverbrauchsleitung über einen einstellbaren Druckwert das Betätigungselement das erste Ventil in Schließrichtung betätigt. Über dieses Beätigungselement wird die gewünschte und für die Funktion der Einrichtung erforderliche Verstellung des ersten Ventils ohne äußere Betätigungseinrichtungen erreicht. Bevorzugt ist dabei das erwähnte Betätigungselement ein Element, das ohne elektrische Energie oder sonstige von außen zugeführte Energie die Betätigung des ersten Ventils vornimmt; einsetzbar ist hierfür beispielsweise ein vom Wasserdruck in der Warmwasserverbrauchsleitung beaufschlagter Kolben, der ein Öffnen und ein Schließen des ersten Ventils in Abhängigkeit von dem in der Warmwasserverbrauchsleitung herrschenden Druck bewirkt.

Um ein für den Benutzer der Einrichtung unerwünschtes und unschönes langsames Ansteigen der Wassermenge bei geöffneter Warmwasserzapfstelle zu vermeiden, wie sie beispielsweise durch die Trägheit eines als zweiter Sensor eingesetzten Dehnstoffkörpers entstehen kann, ist vorgesehen, daß das erste Ventil und das zweite Ventil Schnellöffnungs- und Schnellschlußventile sind. Diese Ventile haben also in der Praxis lediglich zwei Zustände, nämlich den voll geöffneten und den geschlossenen Zustand. Auf diese Weise werden auch Mischströmungen, die gleichzeitig durch die Warmwasserverbrauchsleitung und die Zirkulationsleitung strömen, vermieden. Es findet also auf jeden Fall entweder eine Strömung nur durch die Zirkulationsleitung oder nur durch die Warmwasserverbrauchsleitung statt.

Ergänzend kann die Einrichtung zusätzlich eine Kaltwasserzuleitung umfassen, die zu einem dem zweiten Ventil vor- oder nachgeschalteten Mischventil führt, wobei mittels des Mischventils die Temperatur des durch die Warmwasserverbrauchsleitung zur Warmwasserzapfstelle strömenden Wassers selbstregelnd auf einen einstellbaren Wert begrenzbar ist. Hierdurch wird eine Übertemperatur des an der Warmwasserzapfstelle zapfbaren Warmwassers vermieden, was sowohl Energie einspart als auch Verbrühungsgefahren für die Benutzer der Einrichtung ausschließt.

Um dem Benutzer der Einrichtung die ordnungsgemäße Funktion der Einrichtung anzuzeigen, wird vorgeschlagen, daß das erste Ventil mit einer optisch und/oder akustisch wahrnehmbaren Anzeigeeinheit versehen oder gekoppelt ist, durch die der geöffnete Zustand des ersten Ventils anzeigbar ist. Auf diese Weise erkennt der Benutzer der Einrichtung, ob nach dem Öffnen der Warmwasserzapfstelle die Zirkulation einsetzt, wie dies im Betrieb der Einrichtung vorgesehen ist.

Ebenfalls zur Information des Benutzers der Einrichtung über deren ordnungsgemäße Funktion kann die Einrichtung weiterhin eine den in der Warmwasserverbrauchsleitung hinter dem zweiten Ventil herrschenden Wasserdruck anzeigende Druckanzeigeeinheit umfassen, wobei mit der Druckanzeigeeinheit zumindest die zwei Zustände "Warmwasserverbrauchsleitung steht unter Druck" und "Warmwasserverbrauchsleitung ist drucklos" darstellbar sind. Mittels dieser Druckanzeigeeinheit erkennt der Benutzer der Einrichtung sofort, ob er die Warmwasserzapfstelle ausreichend weit geöffnet hat, um über den Druckabfall in der Warmwasserverbrauchsleitung die Zirkulation und den sich selbsttätig anschließenden Warmwasserzapfvorgang auszulösen. Außerdem dient diese Druckanzeigeeinheit bei der Erstinbetriebnahme der Einrichtung als nützliches Hilfsmittel zur Einstellung der Druckwerte der druckabhängigen Umschaltung des ersten Ventils, da von Ort zu Ort unterschiedliche Wasserdrücke im Wasserversorgungsnetz vorliegen, an die die Einrichtung angepaßt werden muß.

In einer einfachen und zugleich betriebssicheren und für den Benutzer der Einrichtung absolut ausreichenden Ausführung ist die Druckanzeigeeinheit durch einen vom Wasserdruck gegen eine Federkraft verschiebbaren Druckanzeigestift gebildet, der dichtend durch die Warmwasserverbrauchsleitung nach außen geführt und sichtbar angeordnet ist.

Damit die erfindungsgemäße Einrichtung bei einem eventuellen Defekt oder Stromausfall funktionsfähig gehalten werden kann, wird vorgeschlagen, daß durch mindestens eine manuell verstellbare oder fernbedienbare Betätigungseinrichtung das erste Ventil in seiner Schließstellung und gleichzeitig das zweite Ventil in seiner Öffnungsstellung festlegbar ist. Auf diese Weise wird erreicht, daß die Zirkulationsleitung gesperrt und die Warmwasserverbrauchsleitung freigegeben ist, so daß bei einem Öffnen einer Warmwasserzapfstelle das Wasser aus dem Warmwasserspeicher über die Warmwasserzuleitung, das zweite Ventil und die Warmwasserverbrauchsleitung zur Warmwasserzapfstelle strömen kann. Die Zirkulationspumpe mit ihrem Elektromotor als Antrieb ist dann außer Betrieb. Die fernbedienbare Betätigungseinrichtung ist dabei zweckmäßig eine Einrichtung, die ohne elektrische Energie auskommt, da diese Ausführung der Einrichtung speziell für den Notfall gedacht ist, in dem ein Defekt vorliegt oder kein elektrischer Strom zur Verfügung steht.

Bei größeren Installationen ist es erforderlich, in gesetzlich vorgegebenen zeitlichen Abständen Legionellenschutzspülungen vorzunehmen, um eine Vermehrung von gefährlichen Keimen innerhalb der Warmwasserleitungen der Installation auszuschließen. Im Hinblick hierauf sieht eine erste Weiterbildung der Einrichtung vor, daß zur Vornahme einer manuell gesteuerten Legionellenschutzspülung das erste Ventil in der Zirkulationsleitung manuell in seiner Öffnungsstellung festlegbar und zeitgleich damit die Zirkulationspumpe einschaltbar ist. Hierdurch wird bewirkt, daß warmes Wasser aus dem Warmwasserspeicher über die Warmwasserzuleitung bis in die Nähe der Verbrauchsstellen gelangt und von dort durch das erste Ventil und die Zirkulationsleitung wieder zum Warmwasserspeicher zurückgeführt wird. Im Warmwasserspeicher wird das Wasser auf jeden Fall auf eine solche Temperatur aufgeheizt, daß eventuell im Wasser vorhandene Keime abgetötet werden.

Alternativ sieht eine zweite diesbezügliche Ausführung der Einrichtung vor, daß zur Vornahme einer automatisch gesteuerten Legionellenschutzspülung die Einrichtung mit einer von der Warmwasserverbrauchsleitung hinter dem zweiten Ventil zur Zirkulationsleitung hinter dem ersten Ventil führenden Bypassleitung mit einem darin eingebauten, fernschaltbaren Druckentlastungs- und Absperrventil ausgestattet ist, wobei in seinem Grundzustand das Druckentlastungs- und Absperrventil geschlossen ist und wobei das Druckentlastungs- und Absperrventil nach Maßgabe einer Schaltuhr in einstellbaren Zeitabständen für eine einstellbare Zeitspanne in Öffnungsstellung umschaltbar und zeitgleich damit die Zirkulationspumpe einschaltbar ist. Bei dieser Ausführung der Einrichtung wird durch ein kurzzeitiges Öffnen des Druckentlastungs- und Absperrventils ein Öffnen einer Warmwasserzapfstelle simuliert, sodaß der hierdurch verursachte Druckabfall die Zirkulationspumpe einschaltet. Anschließend wird zunächst Wasser aus dem Warmwasserspeicher über die Warmwasserzuleitung und das erste Ventil zur Zirkulationsleitung und durch diese wieder zum Warmwasserspeicher zurückgeführt. Sobald der zweite Sensor die Anwesenheit von warmen Wasser feststellt, wird das zweite Ventil geöffnet und die Strömung des warmen Wassers verläuft nun durch das zweite Ventil und einen Abschnitt der Warmwasserverbrauchsleitung durch die Bypass-Leitung und einen Abschnitt der Zirkulationsleitung zurück in den Warmwasserspeicher. Die Schaltuhr wird dabei zweckmäßig so programmiert, daß die damit bewirkte Legionellenschutzspülung zu solchen Tageszeiten stattfindet, in denen ein Warmwasserverbrauch durch die Benutzer der Einrichtung nicht zu erwarten ist.

Um für den Einbau der Einrichtung in eine sanitäre Installation möglichst wenig Aufwand und Platz zu beanspruchen, sieht die Erfindung vor, daß die Ventile, der zweite Sensor und Abschnitte der Leitungen zu einer eine Zentralbatterie bildenden, integrierten Baueinheit zusammengefaßt sind. Auf diese Weise ist eine kompakte Ausgestaltung der Einrichtung möglich, die einen geringen Einbauraum benötigt. Außerdem sind Fehler beim Einbau der Einrichtung praktisch ausgeschlossen, weil deren einzelne Teile vorab montierbar sind, beispielsweise in einem Herstellungsbetrieb für sanitäre Armaturen.

Eine weitere Maßnahme zur Vereinfachung des Einbaus der Einrichtung in eine sanitäre Installation besteht darin, daß die Zentralbatterie ein geschlossenes Gehäuse mit genormten Rohrschraubanschlüssen für die zu- und abführenden Wasserleitungen aufweist. Damit muß der Installateur vor Ort lediglich noch drei oder vier Leitungen an die Zentralbatterie anschließen, was mit geringem Zeitaufwand erledigt werden kann. Elektrische Anschlüsse benötigt die Zentralbatterie vorteilhaft nicht, so daß auch die Verlegung und Schaltung von elektrischen Verbindungen entfällt. Die ggf. vorgesehenen Einrichtungsteile für die automatische Legionellenschutzspülung sind alle außerhalb der Zentralbatterie anzuordnen, sodaß immer die gleiche Zentralbatterie verwendbar ist, unabhängig davon, ob eine automatische Legionellenschutzspülung vorzusehen ist oder nicht.

Zusammengefaßt bietet die erfindungsgemäße Einrichtung in ihren verschiedenen Weiterbildungen und Ausführungen eine Vielzahl von Vorteilen, in erster Linie eine Wasserersparnis bei der Warmwasseranforderung und eine Heizkosteneinsparung, da eine unnötige Zirkulation von warmem Wasser vermieden wird. Eine weitere Heizkosteneinsparung ergibt sich dadurch, daß mit der Einrichtung Fehlzapfungen bei Einhebelmischern vermieden werden. Solche Fehlzapfungen entstehen immer dann, wenn der Einhebelmischer in Mittelstellung des Bedienungshebels für eine relativ kurze Zeit geöffnet wird, die so kurz ist, daß das warme Wasser nicht bis zum Auslaß der Zapfstelle gelangt. Es wird aber jedes Mal ein bestimmtes Volumen von warmem Wasser aus dem Warmwasserspeicher entnommen und in die Wasserleitungen zwischen Warmwasserspeicher und Zapfstelle geführt, wo es dann anschließend stehen bleibt und abkühlt. Bei der erfindungsgemäßen Einrichtung muß der Benutzer beim Einhebelmischer den Hebel bewußt bis zum Anschlag auf "warm" verstellen, damit warmes Wasser gezapft werden kann.

Ein weiterer Vorteil besteht darin, daß geringere Kalkablagerungen im Vergleich zu Einrichtungen mit einer stetigen oder längeren Zirkulation entstehen. Durch die kurzen Laufzeiten der Zirkulationspumpe werden gleichzeitig Wärmeverluste aus dem durch die Zirkulationsleitung geförderten Wasser vermindert. Eine vorteilhafte Anwendung der Einrichtung besteht bei ausgedehnten Installationsanlagen mit stetiger Zirkulation. Hier kann die Zentralbatterie mehrfach eingesetzt werden, um Teilstrecken des Warmwassernetzes bei Nichtbedarf von Warmwasserzapfungen von der Zirkulation abzutrennen und auf diese Weise kalt zu stellen. Die Teile der Zirkulationsleitung, die nur kurzzeitig benötigt werden, müssen nicht aufwendig isoliert werden, da praktisch nur noch kaltes Wasser durch diese Teile der Zirkulationsleitung strömt. Dies ist auch hinsichtlich einer Keimbildung, insbesondere Legionellenbildung, vorteilhaft, weil diese sich in kaltem Wasser praktisch nicht vermehren. Durch die kurzen Laufzeiten der Zirkulationspumpe wird für deren Antrieb weniger Strom verbraucht und es wird eine entsprechende Verlängerung der Lebensdauer der Zirkulationspumpe erzielt.

Für den Benutzer vorteilhaft ist die Sicherungsmöglichkeit gegen ein Zapfen von Warmwasser mit Übertemperatur, so daß Verletzungsgefahren vermieden werden und zudem eine Energieeinsparung erzielt wird. Zur Vermeidung einer Keimbildung innerhalb des Leitungsnetzes bietet die Einrichtung je nach ihrer Ausführung die Möglichkeit der manuellen oder automatischen Legionellenschutzspülung. Auch bei Stromausfall kann bei entsprechender Ausgestaltung die Einrichtung nach einem einfachen Umstellvorgang genutzt werden, so daß auch bei Stromausfall oder einem anderen Defekt weiter warmes Wasser gezapft werden kann, sofern nicht auch die Warmwassererzeugung stromabhängig ist.

Aufgrund der mit der Einrichtung erzielbaren Einsparungen an Wasser und Heizenergie und Strom amortisiert sich die Einrichtung in kurzer Zeit, so daß sehr schnell ein wirksamer Nutzen in finanzieller Hinsicht erreicht wird. Auch bei Fertigung und Einbau der Einrichtung fallen keine zu hohen Kosten an, so daß die Einplanung der erfindungsgemäßen Einrichtung bei der Erstellung oder Modernisierung einer Installation keine hohe finanzielle Hürde darstellt. Die Einrichtung eignet sich dabei sowohl für Privathaushalte als auch für größere Gebäude, insbesondere Kindergärten, Schulen, Krankenhäuser, Hotels oder Sportstätten, wo aufgrund des üblicherweise relativ hohen Warmwasserbedarfs besonders große Einsparungsmöglichkeiten bestehen.

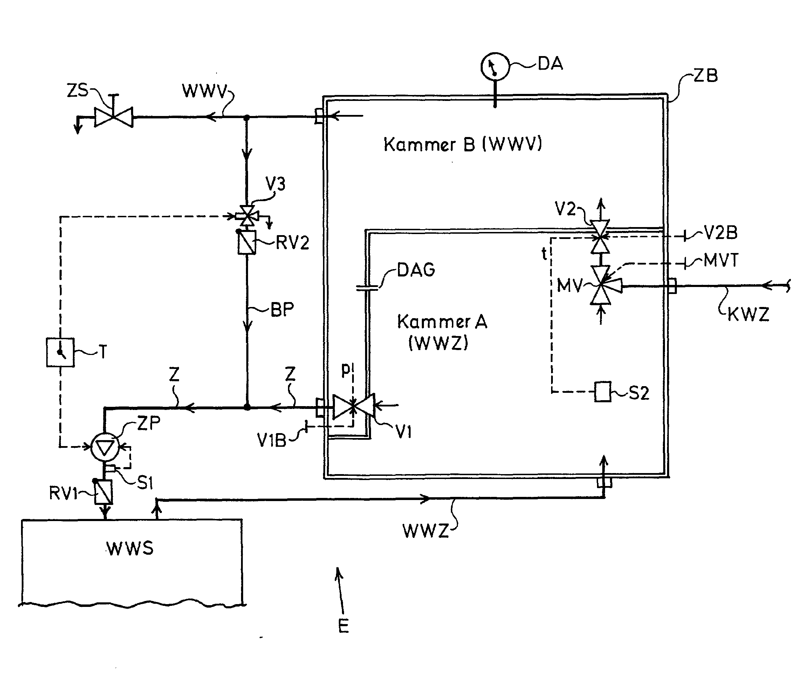

Ein Ausführungsbeispiel der Erfindung wird im folgenden anhand einer Zeichnung erläutert. Die einzige Figur der Zeichnung zeigt in schematischer Darstellung eine Einrichtung zur Bereitstellung von Warmwasser in einer sanitären Installation.

Die Einrichtung E umfaßt einen Warmwasserspeicher WWS, der links unten in der Zeichnung teilweise dargestellt ist. Aus dem Warmwasserspeicher WWS führt eine Warmwasserzuleitung WWZ zu einer Zentralbatterie ZB, die ein geschlossenes Gehäuse mit zwei Kammern A und B sowie mehreren darin angeordneten Ventilen V1, V2, MV umfaßt. Die Warmwasserzuleitung WWZ mündet in die Kammer A, die damit einen Teil der Warmwasserzuleitung WWZ bildet. Aus der Kammer B der Zentralbatterie ZB führt eine Warmwasserverbrauchsleitung WWV zu mindestens einer Warmwasserzapfstelle ZS, so daß die Kammer B einen Abschnitt der Warmwasserverbrauchsleitung WWV bildet. Weiterhin führt eine Zirkulationsleitung Z von der Zentralbatterie ZB über eine Zirkulationspumpe ZP und ein erstes Rückschlagventil RV1 zurück in den Warmwasserspeicher WWS. Die Zirkulationsleitung Z ist eingangsseitig über ein erstes Ventil V1 mit der Kammer A der Zentralbatterie verbindbar, je nachdem, ob das Ventil V1 geöffnet oder geschlossen ist. Die Kammer A der Zentralbatterie ZB ist über ein zweites Ventil V2 mit der Kammer B verbindbar, auch hier je nachdem, ob das Ventil V2 geöffnet oder geschlossen ist.

Innerhalb der Kammer A der Zentralbatterie ist weiterhin ein Mischventil MV angeordnet, dessen einer Einlaß mit der Kammer A und dessen anderer Einlaß mit einer von außen zugeführten Kaltwasserzuleitung KWZ verbunden ist. Der Ausgang des Mischventils MV ist mit dem Eingang des zweiten Ventils V2 verbunden.

Zwischen der Warmwasserverbrauchsleitung WWV und der Zirkulationsleitung Z ist außerhalb der Zentralbatterie ZB eine Bypass-Leitung BP vorgesehen, in die ein zweites Rückschlagventil RV2 eingeschaltet ist, das eine Fließrichtung nur von der Warmwasserverbrauchsleitung WWV zur Zirkulationsleitung Z erlaubt. In die Bypass-Leitung BP ist vor dem Rückschlagventil RV2 ein Druckentlastungsund Absperrventil V3 eingebaut, das fernbetätigt umstellbar ist. In seiner Grundstellung sperrt das Ventil V3 die Bypassleitung BP; in seiner zweiten Stellung gibt das Ventil V3 die Bypassleitung BP frei und sorgt zugleich für eine Druckentlastung in der Bypassleitung BP durch einen dann offenen Abzweig. Für die Fernbetätigung ist hier eine Zeitschaltuhr T vorgesehen, die außer dem Öffnen und Schließen des Druckentlastungs- und Absperrventils V3 auch die Zirkulationspumpe ZP einschalten und ausschalten kann.

Weiterhin umfaßt die Einrichtung E in dem dargestellten Ausführungsbeispiel noch zwei Sensoren S1, S2. Bei dem ersten Sensor S1 handelt es sich hier um einen Drucksensor, der den in der Zirkulationsleitung Z zwischen der Zirkulationspumpe ZP und dem ersten Rückschlagventil RV1 herrschenden Druck erfaßt und der mit der Steuerung der Zirkulationspumpe ZB in Wirkverbindung steht. Bei dem zweiten Sensor S2 handelt es sich um einen Temperatursensor, der die Temperatur des in der Kammer A befindlichen Wassers erfaßt und der temperaturabhängig das Ventil V2 in Öffnungsstellung oder Schließstellung bringt.

Als letztes Element gehört zu dem Beispiel der Einrichtung E gemäß der Zeichnungsfigur noch eine Druckanzeigeeinheit DA, mit der der in der Kammer B herrschende Wasserdruck anzeigbar ist.

Wie erwähnt, ist das Ventil V2 nach Maßgabe des zweiten, temperaturempfindlichen Sensors S2 temperaturabhängig in Öffnungs- oder Schließstellung bringbar; ergänzend ist das zweite Ventil V2 durch eine Betätigungseinrichtung V2B manuell in Öffnungsstellung festlegbar. Das Mischventil MV ist über ein von außen betätigbares Temperatureinstellelement MVT auf eine bestimmte Temperatur des aus dem Mischventil MV zum zweiten Ventil V2 strömenden Wassers einstellbar. In einer vereinfachten Version der Einrichtung E kann man auf das Mischventil MV verzichten, da es nur als Übertemperatursicherung dient, um Verbrühungsgefahren für die Benutzer zu vermeiden.

Das Ventil V1 ist ein druckabhängig umstellbares Ventil, wobei für die Verstellung des Ventils V1 der in der Kammer B herrschende Druck p herangezogen wird. Zugleich besitzt auch das Ventil V1 eine manuell verstellbare Betätigungseinrichtung V1B, mittels der das Ventil V1 zumindest in seiner Schließstellung arretierbar ist.

Im folgenden wird die Funktion der Einrichtung E anhand von verschiedenen betrieblichen Zuständen erläutert:
Zunächst wird ein Grundzustand der Einrichtung E erläutert, der dann vorliegt, wenn kein Warmwasser an der Warmwasserzapfstelle ZS gezapft wird und wenn auch längere Zeit vorher kein Warmwasser gezapft wurde. In diesem Zustand steht die Zirkulationspumpe ZP still und es findet also keinerlei Wasserströmung innerhalb der Einrichtung E statt. Im Warmwasserspeicher WWS befindet sich heißes Wasser. In der Warmwasserzuleitung WWZ, innerhalb der Zentralbatterie ZB und innerhalb der Warmwasserverbrauchsleitung WWV befindet sich Wasser, das inzwischen abgekühlt ist. Abgekühltes Wasser steht auch in der BypassLeitung BP und in der Zirkulationsleitung Z. Der Wasserdruck in den Kammern A und B der Zentralbatterie ist gleich hoch und entspricht dem Wasserdruck im öffentlichen Leitungsnetz, an das der Warmwasserspeicher WWS angeschlossen ist. Das Vorliegen des gleichen, hohen Wasserdrucks in den Kammern A und B wird durch eine Druckausgleichsbohrung DAG mit sehr kleinem Querschnitt gewährleistet, die die beiden Kammern A und B miteinander verbindet.

Wenn ein Benutzer der Einrichtung E warmes Wasser zapfen möchte, öffnet er die Warmwasserzapfstelle ZS. Dies führt zu einem Druckabfall in der Warmwasserverbrauchsleitung WWV und in der Kammer B der Zentralbatterie ZB, die einen Teil der Warmwasserverbrauchsleitung WWV bildet. Der Druckabfall setzt sich über die Leitungen der Einrichtung E fort bis zum ersten Sensor S1, der den Druckabfall in der Zirkulationsleitung Z erfaßt und daraufhin ein Einschaltsignal an die Zirkulationspumpe ZP liefert. Gleichzeitig sorgt der in der Kammer B auftretende Druckabfall dafür, daß das druckabhängig verstellbare Ventil V1 in seine Öffnungsstellung gelangt. Das Ventil V2 befindet sich jetzt in Schließstellung, weil der Sensor S2 eine niedrige Temperatur erfaßt, die ein Schließen des Ventils V2 bewirkt. In diesem Zustand der Einrichtung E findet nun eine Wasserzirkulation vom Warmwasserspeicher WWS über die Warmwasserzuleitung WWZ durch das erste Ventil V1 und die Zirkulationsleitung Z über die Zirkulationspumpe ZP zurück in den Warmwasserspeicher WWS statt. Durch diese Zirkulation wird nach und nach das bisher in der Kammer A befindliche abgekühlte Wasser aus dieser verdrängt und durch warmes Wasser aus dem Warmwasserspeicher WWS ersetzt. Dieser Temperaturanstieg wird vom Sensor S2 erfaßt und sobald die Temperatur einen vorgebbaren Wert übersteigt, wird das Ventil V2 nach Maßgabe des Sensors S2 in Öffnungsstellung gebracht. Zweckmäßig ist das Ventil V2, ebenso wie das Ventil V1, ein Schnellöffnungs- und Schnellschlußventil, um einen schnellen Übergang von der Schließstellung in die Öffnungsstellung und umgekehrt zu erreichen.

Die jetzt infolge der ansteigenden Wassertemperatur in der Kammer A erfolgende Öffnung des Ventils V2 führt zu einer Zuleitung von warmen Wasser in die Kammer B der Zentralbatterie ZB und von dort durch die Warmwasserverbrauchsleitung WWV zur Warmwasserzapfstelle ZS, die während des gesamten Vorganges in Öffnungsstellung geblieben ist. Der Zustrom von warmem Wasser in die Kammer B sorgt in dieser für einen Druckanstieg, der ein umgehendes Schließen des Ventils V1 bewirkt. Damit ist der Strömungsweg über die Zirkulationsleitung Z abgesperrt. Zugleich steigt in der Zirkulationsleitung Z der Wasserdruck an, was über den Sensor S1 zu einem Ausschaltsignal für die Zirkulationspumpe ZP führt. Die Einrichtung E schaltet hier also selbsttätig aus dem Zirkulationszustand in den Warmwasserzapfzustand um. Der Benutzer der Einrichtung E muß lediglich die Warmwasserzapfstelle ZS öffnen und eine kurze Zeit abwarten, bis die selbsttätige Umschaltung der Einrichtung E aufgrund des zur Zentralbatterie ZB gelangten warmen Wassers erfolgt. In der Praxis beträgt diese Zeit bei üblichen Leitungslängen einige Sekunden bis maximal eine Minute.

Am Ende des Zapfvorganges wird die Warmwasserzapfstelle ZS durch den Benutzer geschlossen. Solange das in der Zentralbatterie ZB befindliche Wasser noch eine Temperatur oberhalb eines einstellbaren Temperaturgrenzwertes hat, wird das Ventil V2 in Öffnungsstellung gehalten, so daß bei einem neuen Warmwasserzapfvorgang sofort warmes Wasser zur Verfügung steht. Wenn nach längerem Nichtbedarf an warmem Wasser das Wasser in der Zentralbatterie ZB abkühlt, wird bei Absinken der Temperatur unter einen vorgebbaren Temperaturgrenzwert über den Sensor S2 das Ventil V2 geschlossen. Bei einem erneuten Warmwasserbedarf wird so zunächst wieder über die Zirkulationsleitung Z und die Zirkulationspumpe ZP warmes Wasser zur Zentralbatterie ZB gefördert, worauf dann der zuvor beschriebene Vorgang wieder erneut abläuft.

Das Mischventil MV dient dazu, eine zu hohe Temperatur des gezapften Warmwassers zu vermeiden. Hierzu führt die Kaltwasserzuleitung KWZ zum zweiten Eingang des Mischventils MV. Über die Temperatureinstellung MVT kann die Temperatur des aus dem Mischventil MV ausströmenden, dem Ventil V2 zugeführten Wassers auf einen vorgebbaren Temperaturwert begrenzt werden.

Die Bypass-Leitung BP, das Ventil V3 und die Zeitschaltuhr T dienen zur Durchführung einer automatischen Legionellenschutzspülung, die bei Installationen ab einer bestimmten Größe gesetzlich vorgeschrieben ist. Die Zeitschaltuhr T ist dabei zweckmäßig so programmiert, daß die automatische Legionellenschutzspülung zu Zeiten erfolgt, in denen in aller Regel kein warmes Wasser gezapft wird. Wenn eine automatische Legionellenschutzspülung durchgeführt wird, gibt die Zeitschaltuhr T zum einen einen Öffnungsbefehl an das fernbetätigbare Druckentlastungs- und Absperrventil V3 und zum anderen einen Einschaltbefehl an die Zirkulationspumpe ZP. Das Druckentlastungs- und Absperrventil V3 simuliert für die Zentralbatterie ZB eine Warmwasserentnahme, da durch Öffnen des Druckentlastungs- und Absperrventils V3 der Wasserdruck in der Warmwasserverbrauchsleitung WWV und in der Kammer B abfällt. Dieser Druckabfall sorgt, wie oben schon beschrieben, für ein Öffnen des ersten Ventils V1, so daß nun eine Zirkulation vom Warmwasserspeicher WWS über die Warmwasserzuleitung WWZ durch das erste Ventil V1 und die Zirkulationsleitung Z zurück zum Warmwasserspeicher WWS erfolgen kann, wobei die Zirkulation durch die Zirkulationspumpe ZP in Gang gehalten wird. Sobald in der Kammer A warmes Wasser ankommt, wird dies durch den zweiten Sensor S2 festgestellt und nach dessen Maßgabe das Ventil V2 geöffnet. Das warme Wasser strömt nun aus der Kammer A in die Kammer B und von dort über einen Abschnitt der Warmwasserverbrauchsleitung WWV, durch die Bypass-Leitung BP und einen Abschnitt der Zirkulationsleitung Z durch die Zirkulationspumpe ZP wieder in den Warmwasserspeicher WWS. Eine Strömung in umgekehrter Richtung wird dabei durch die beiden Rückschlagventile RV1 und RV2 ausgeschlossen. Die Zeitschaltuhr T hält den Kreislauf für die Legionellenschutzspülung für eine ausreichende Zeit in Gang. Wenn diese Zeit abgelaufen ist, wird die Zirkulationspumpe ZP ausgeschaltet und das Druckentlastungsund Absperrventil V3 geschlossen. Zur Druckentlastung über das Druckentlastungs- und Absperrventil V3 genügt auch ein nur kurzes Öffnen, was den Vorteil hat, daß über das Druckentlastungs- und Absperrventil V3 nur einige Tropfen Wasser austreten. Auf jeden Fall genügt für den Abzweig des Druckentlastungs- und Absperrventils V3 ein sehr kleiner Querschnitt, der praktisch nicht zu einem meßbaren Wasserverbrauch führt.

Nach der automatischen Legionellenschutzspülung befindet sich die Einrichtung E wieder in ihrem Grundzustand, wie oben erläutert.

Wie aus der Zeichnungsfigur ersichtlich ist, sind die beiden Ventile V1 und V2, das Mischventil MV und der zweite Sensor S2 zu einer Zentralbatterie ZB zusammengefaßt, die als kompaktes, geschlossenes Bauteil ausführbar ist. Die Warmwasserzuleitung WWZ, die Kaltwasserzuleitung KWZ, die Warmwasserverbrauchsleitung WWV und die Zirkulationsleitung Z sind zweckmäßig über genormte Rohrschraubanschlüsse an die Zentralbatterie angeschlossen.

Die Druckanzeigeeinheit DA ist dazu vorgesehen, dem Benutzer der Einrichtung E anzuzeigen, welcher Druck in der Kammer B der Zentralbatterie herrscht. Auf diese Weise ist für den Benutzer erkennbar, ob das Öffnen der Warmwasserzapfstelle ZS wie gewünscht zum Druckabfall in der Kammer B und damit zum Auslösen der Zirkulation geführt hat. Außerdem kann der Installateur bei der Erstinbetriebnahme der Einrichtung E die Druckanzeigeeinheit DA benutzen, um das Ventil V1 an den örtlichen Wassernetzdruck anzupassen.

Die manuell verstellbaren Betätigungseinrichtungen V1B und V2B des ersten Ventils V1 und des zweiten Ventils V2 dienen dazu, bei Bedarf die Zirkulation durch die Zirkulationsleitung Z zu unterbinden und das von der Warmwasserzuleitung WWZ kommende Wasser in jedem Falle direkt zur Warmwasserverbrauchsleitung WWV zu führen. Dies ist insbesondere dann zweckmäßig, wenn beispielsweise ein Stromausfall oder sonstiger Defekt vorliegt, bei dem beispielsweise die Zirkulationspumpe ZP nicht mehr eingeschaltet werden kann.

## Patentansprüche

1. Einrichtung (E) für die Bereitstellung von Warmwasser in einer sanitären Installation mit mindestens einer Warmwasserzapfstelle (ZS) und mit Warmwasserzirkulation, wobei die Einrichtung (E) zumindest eine von einem Warmwasserspeicher (WWS) kommende Warmwasserzuleitung (WWZ), eine zum Warmwasserspeicher (WWS) zurückführende Zirkulationsleitung (Z) mit einer schaltbaren Zirkulationspumpe (ZP) und eine zu der Warmwasserzapfstelle (ZS) führende Warmwasserverbrauchsleitung (WWV) umfaßt, wobei ein erster Sensor (S1) vorgesehen ist, mit dem ein Öffnen der Warmwasserzapfstelle (ZS) feststellbar ist und durch den daraufhin die Zirkulationspumpe (ZP) einschaltbar ist, **dadurch gekennzeichnet,**
- **daß** die Einrichtung (E) weiter ein erstes, druckgesteuertes Ventil (V1) zwischen der Warmwasserzuleitung (WWZ) und der Zirkulationsleitung (Z), ein zweites, temperaturgesteuertes Ventil (V2) zwischen der Warmwasserzuleitung (WWZ) und der Warmwasserverbrauchsleitung (WWV) und einen zweiten, temperaturempfindlichen Sensor (S2) an oder in der Warmwasserzuleitung (WWZ) umfaßt,
- **daß** das erste Ventil (V1) durch den bei einem Öffnen der Warmwasserzapfstelle (ZS) in der Warmwasserverbrauchsleitung (WWV) auftretenden Druckabfall in Öffnungsstellung bringbar ist,
- **daß** das zweite Ventil (V2) durch den zweiten Sensor (S2) bei einem Temperaturanstieg des Wassers in der Warmwasserzuleitung (WWZ) über einen einstellbaren Temperaturwert in Öffnungsstellung und bei einem Temperaturabfall des Wassers in der Warmwasserzuleitung (WWZ) unter einen einstellbaren Temperaturwert in Schließstellung bringbar ist und
- **daß** durch den infolge eines Öffnens des zweiten Ventils (V2) auftretenden Druckanstieg in der Warmwasserverbrauchsleitung (WWV) das erste Ventil (V1) in Schließstellung bringbar und die Zirkulationspumpe (ZP) ausschaltbar ist.

2. Einrichtung nach Anspruch 1, **dadurch gekennzeichnet, daß** der erste Sensor (S1) ein druckempfindlicher Schalter ist, der bei einem durch das Öffnen der Warmwasserzapfstelle (ZS) verursachten Druckabfall in der Warmwasserverbrauchsleitung (WWV) oder einer damit verbundenen Leitung unter einen einstellbaren Druckwert ein Einschaltsignal und bei einem Druckanstieg in der Warmwasserverbrauchsleitung (WWV) oder einer damit verbundenen Leitung über einen einstellbaren Druckwert ein Ausschaltsignal für die Zirkulationspumpe (ZP) erzeugt.

3. Einrichtung nach Anspruch 1 oder 2, **dadurch gekennzeichnet, daß** der zweite Sensor (S2) ein Dehnstoffkörper ist, der bei einem Temperaturanstieg in der Warmwasserzuleitung (WWZ) über einen einstellbaren Temperaturwert das zweite Ventil (V2) in Öffnungsrichtung betätigt und der bei einem Temperaturabfall in der Warmwasserzuleitung (WWZ) unter einen einstellbaren Temperaturwert das zweite Ventil (V2) in Schließrichtung betätigt.

4. Einrichtung nach einem der vorhergehenden Ansprüche, **dadurch gekennzeichnet, daß** ein Betätigungselement des ersten Ventils (V1) mit der Warmwasserverbrauchsleitung (WWV) hinter dem zweiten Ventil (V2) derart hydraulisch gekoppelt ist, daß bei einem Druckabfall in der Warmwasserverbrauchsleitung (WWV) unter einen einstellbaren Druckwert das Betätigungselement das erste Ventil (V1) in Öffnungsrichtung betätigt und daß bei einem Druckanstieg in der Warmwasserverbrauchsleitung (WWV) über einen einstellbaren Druckwert das Betätigungselement das erste Ventil (V1) in Schließrichtung betätigt.

5. Einrichtung nach einem der vorhergehenden Ansprüche, **dadurch gekennzeichnet, daß** das erste Ventil (V1) und das zweite Ventil (V2) Schnellöffnungs- und Schnellschlußventile sind.

6. Einrichtung nach einem der vorhergehenden Ansprüche, **dadurch gekennzeichnet, daß** sie zusätzlich eine Kaltwasserzuleitung (KWZ) umfaßt, die zu einem dem zweiten Ventil (V2) vor- oder nachgeschalteten Mischventil (MV) führt, wobei mittels des Mischventils (MV) die Temperatur des durch die Warmwasserverbrauchsleitung (WWV) zur Warmwasserzapfstelle (ZS) strömenden Wassers selbstregelnd auf einen einstellbaren Wert begrenzbar ist.

7. Einrichtung nach einem der vorhergehenden Ansprüche, **dadurch gekennzeichnet, daß** das erste Ventil (V1) mit einer optisch und/oder akustisch wahrnehmbaren Anzeigeeinheit versehen oder gekoppelt ist, durch die der geöffnete Zustand des ersten Ventils (V1) anzeigbar ist.

8. Einrichtung nach einem der vorhergehenden Ansprüche, **dadurch gekennzeichnet, daß** sie eine den Wasserdruck in der Warmwasserverbrauchsleitung (WWV) hinter dem zweiten Ventil (V2) anzeigende Druckanzeigeeinheit (DA) umfaßt, wobei mit der Druckanzeigeeinheit (DA) zumindest die zwei Zustände "Warmwasserverbrauchsleitung steht unter Druck" und "Warmwasserverbrauchsleitung ist drucklos" darstellbar sind.

9. Einrichtung nach Anspruch 8, **dadurch gekennzeichnet, daß** die Druckanzeigeeinheit (DA) durch einen vom Wasserdruck gegen eine Federkraft verschiebbaren Druckanzeigestift gebildet ist, der dichtend durch die Warmwasserverbrauchsleitung (WWV) nach außen geführt und sichtbar angeordnet ist.

10. Einrichtung nach einem der vorhergehenden Ansprüche, **dadurch gekennzeichnet, daß** durch mindestens eine manuell verstellbare oder fernbedienbare Betätigungseinrichtung (V1B, V2B)) das erste Ventil (V1) in seiner Schließstellung und gleichzeitig das zweite Ventil (V2) in seiner Öffnungsstellung festlegbar ist.

11. Einrichtung nach einem der vorhergehenden Ansprüche, **dadurch gekennzeichnet, daß** zur Vornahme einer manuell gesteuerten Legionellenschutzspülung das erste Ventil (V1) in der Zirkulationsleitung (Z) manuell in seiner Öffnungsstellung festlegbar und zeitgleich damit die Zirkulationspumpe (ZP) einschaltbar ist.

12. Einrichtung nach einem der Ansprüche 1 bis 10, **dadurch gekennzeichnet, daß** zur Vornahme einer automatisch gesteuerten Legionellenschutzspülung die Einrichtung (E) mit einer von der Warmwasserverbrauchsleitung (WWV) hinter dem zweiten Ventil (V2) zur Zirkulationsleitung (Z) hinter dem ersten Ventil (V1) führenden Bypassleitung (BP) mit einem darin eingebauten, fernschaltbaren Druckentlastungs- und Absperrventil (V3) ausgestattet ist, wobei in seinem Grundzustand das Druckentlastungs- und Absperrventil (V3) geschlossen ist und wobei das Druckentlastungsund Absperrventil (V3) nach Maßgabe einer Schaltuhr (T) in einstellbaren Zeitabständen für eine einstellbare Zeitspanne in Öffnungsstellung umschaltbar und zeitgleich damit die Zirkulationspumpe (ZP) einschaltbar ist.

13. Einrichtung nach einem der vorhergehenden Ansprüche, **dadurch gekennzeichnet, daß** die Ventile (V1, V2, MV), der zweite Sensor (S2) und Abschnitte der Leitungen (WWZ, KWZ, WWV, KWV, Z) zu einer eine Zentralbatterie (ZB) bildenden, integrierten Baueinheit zusammengefaßt sind.

14. Einrichtung nach Anspruch 13, **dadurch gekennzeichnet, daß** die Zentralbatterie (ZB) ein geschlossenes Gehäuse mit genormten Rohrschraubanschlüssen für die zu- und abführenden Wasserleitungen (WWZ, KWZ, WWV, KWV, Z) aufweist.
